# EUROPEAN PATENT SPECIFICATION

(11) **EP 4 299 685 B1**
(45) Date of publication and mention of the grant of the patent: **15.05.2024**
(21) Application number: 22382734.6
(22) Date of filing: 29.07.2022
(51) Int. Cl.: C09D 11/52, C09D 11/037, C09D 11/033, B65D 81/34

(54) **SUSCEPTOR INK FOR MICROWAVEABLE PACKAGING**
SUSZEPTORTINTE FÜR MIKROWELLENGEEIGNETE VERPACKUNGEN
ENCRE SUSCEPTIBILITÉ POUR LES EMBALLAGES MICRO-ONDABLES

(43) Date of publication of application: 03.01.2024
(73) Proprietor: Eniter, S.A., 46930 Quart de Poblet (València) (ES)
(72) Inventor: Ferreres García, Javier, 46930 Quart de Poblet (València) (ES)
(74) Representative: Sahuquillo Huerta, Jesús

(56) References cited:
- WO-A1-89/11771
- JP-A- 2020 196 535
- US-A- 5 175 031
- US-A1- 2011 111 150

## Description

### Technical Field

This invention concerns a composition of a susceptor ink for microwaveable packaging. This invention also concerns packaging that contains the susceptor ink that can be used in microwaves.

### Prior art

A susceptor can be defined as a material that absorbs electromagnetic energy and converts it into heat. A susceptor comprises at least one conductive material configured to transmit heat to a second nonconductive material. This conductive material is used, in accordance with the well-established state of the art, to transfer heat to the target material by conduction or radiation. Therefore, susceptor inks have been widely used for materials used in food packaging that can be used in microwave ovens. This type of packaging is well known in the state of the art and comprises a cellulosic material (paper with different weights and compositions, as well as cardboard) to which a susceptor ink is applied as a conductive material. The most commonly used example is aluminised polyester packaging.

To improve the quality of the packaging and cut down on manufacturing costs, a number of conventional printing inks have been developed. In particular, these susceptor ink compositions use silver (Ag) as a conductive material. Furthermore, ink compositions containing aluminium/calcium carbonate, aluminium/silicon carbide and aluminium/carbon black have been used in the state of the art. However, these compositions are not useful as susceptors (EP0466361, US4959516 or US4970358).

EP3401371 describes a susceptor ink comprising metal particles, particles of at least two semiconductor products and one or more alkali or alkaline earth metal salts. However, it is an expensive and complex product to produce.

The document JP 2020-196535A relates to provide a packaging material that includes at least a plastic film, a printing layer, an adhesive layer, and a sealant layer, stacked in this order from the outer layer side. The printing layer and the adhesive layer are adjacent to each other. The packaging material has a brilliant printing layer containing a brilliant pigment and a binder resin as the printing layer. The packaging material satisfies the following conditions 1 and 2. Diffuse light reflection SCE is measured from the outer layer side of the packaging material, and when an L* value of the L*a*b* colour system calculated from a spectral spectrum of the diffused light reflection SCE is denoted as an L*SCE, the L*SCE is 40 or more. The 60-degree mirror glossiness is measured from the outer layer side of the packaging material in accordance with JIS Z8741: 1997, and a coefficient of variation of the 60-degree mirror glossiness calculated from the measured value is 0.100 or more.

The document US5175031A relates to a coated laminate is described comprising a microwave transparent supporting sheet or substrate such as paper, paperboard or plastic upon which is printed a susceptor lamina comprising a cured dispersion of an organic printing ink vehicle matrix in which is uniformly suspended at least two kinds of dispersed particles, one of which is an electrically conductive microwave interactive carbon particle and the other of which is an electrically nonconductive suspended mineral attenuator particle for dissipating, spreading and modulating the energy received by the conductive particles. Of the two kinds of suspended particles, only the carbon particles interact with microwave energy directly. Both types of suspended particles remain dispersed in the ink vehicle until printed and cured. The printed lamina can include areas of solid coverage surrounded by peripheral areas of decreased coverage which include small open areas, i.e., unprinted openings, with larger size unprinted openings provided proceeding toward the periphery of the susceptor lamina.

The document WO89/11771A1 discloses a medium formed by a mixture of polymeric binder with conductive metal and either semiconductive particles or galvanic couple alloy particles that can be coated or printed on a substrate to convert electromagnetic radiation to heat without arcing and produce increase heating of foods. Conversion efficiency can be controlled by the choice, thickness, pattern and number of materials used in the medium. The medium can be formulated to be used repeatedly without burn out or can be formulated to be used only once after which it becomes microwave inert. The conductive particles are typically aluminium, copper, zinc, and nickel; the semiconductive particles are typically carbon, titanium carbide, silicon carbide and zinc oxide; and the galvanic couple alloy particles are typically aluminium-nickel alloy, aluminium-cobalt alloy, and aluminium-copper alloy.

Finally, the document US2011/111150A1 discloses a brightening ink composition for printing intended for realizing a heat insulating foamed paper container produced by foaming a low-melting point film by a heat treatment, such as a heat insulating foamed paper cup, the brightening ink composition conforming to the foaming without the occurrence of ink splits (cracks) upon foaming, having very small differences in level between the brightening printed areas and other printed areas at the container surface after foaming, making the container surface almost smooth, and having excellent design applicability and aesthetic properties as well as excellent heat resistance and print quality. A brightening ink composition containing a brightening material that imparts a sense of brightness, silicon dioxide, a binder resin and a solvent is prepared, and the brightening ink composition is used to form a printed layer of a paper container material for producing a heat insulating foamed paper container.

### Explanation of the invention

This invention is a susceptor ink comprising at least one metallic particle dispersed in a vehicle comprising, as a minimum, one varnish and at least one solvent to produce a susceptor ink that is suitable for printing on a paper substrate, which improves quality and conductivity, as well as optimum processability. Therefore, this invention strives to be an ink that is good for printing, making it possible to manufacture more straightforward, efficient, and cost-effective microwaveable packaging.

This invention's ink also aims to obtain a stable ink under manufacturing and cooking conditions; in particular, to obtain an ink that maintains its integrity during and after cooking, in such a way that it does not contaminate the food through the migration of decomposing compounds from the susceptor ink itself. Finally, the invention's susceptor ink is geared towards manufacturing packaging containing a susceptor ink that is more efficient while maintaining the organoleptic properties of the food.

These objects are achieved with the susceptor ink of claim 1. Particular embodiments of the invention are described in the dependent claims.

### Detailed explanation of one mode of implementation of the invention

All terms used herein, unless otherwise indicated, shall have the meanings that are usual in the state of the art. Other specific terms and definitions are listed below. For the purposes of the invention, any given range includes the upper and lower points of the range. The ranges stated are approximate, unless otherwise stated. The term "percentage (%) by weight" refers to the percentage of each ink ingredient relative to the total weight of the ink.

As mentioned above, in a first facet of the invention, it is a susceptor ink comprising a conductive material together with at least one vehicle wherein, in a preferred implementation, the conductive material is metallic particles and, more specifically, aluminium particles. In a preferred implementation of the invention, aluminium is present in a weight percentage of 19.4%.

The vehicle comprises, in the first facet of the invention, a varnish and a solvent. In a preferred implementation, the varnish consists of aliphatic polyurethane with a weight percentage of 12.8%.

The solvent, in a practical implementation is a mixture of ethyl acetate and alcohol. In a preferred implementation, the solvent is a mixture of alcohol and ethyl acetate with a weight percentage of 67.8%.

### Examples

Different tests have been conducted with different susceptor inks, comparing them with the most common inks currently on the market, as well as with the two formulations of patent EP3401371 ("ITENE" formulation) . The susceptor ink formulations evaluated are shown in Table 1.

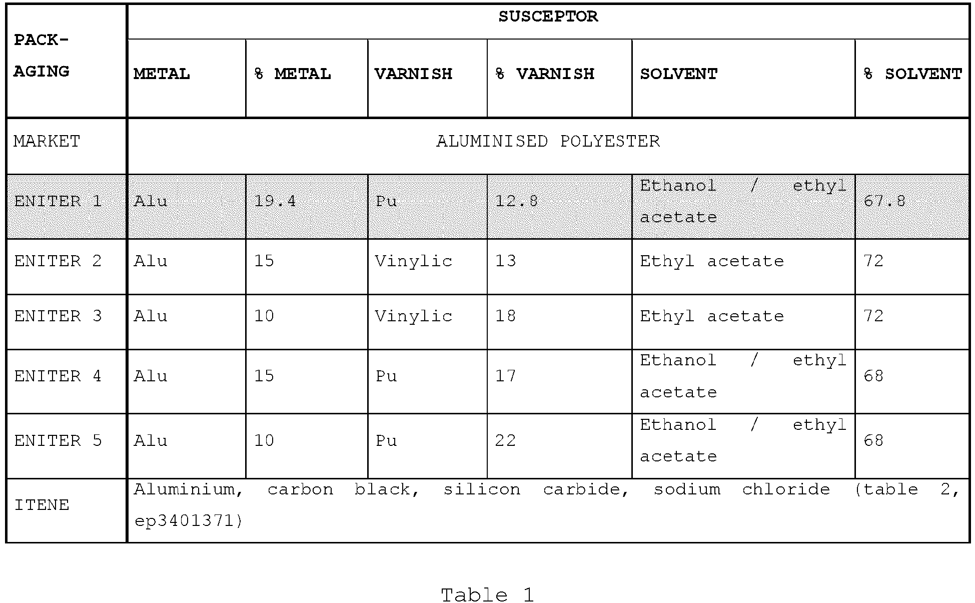

The test results are shown in Table 2 (in correlative order):

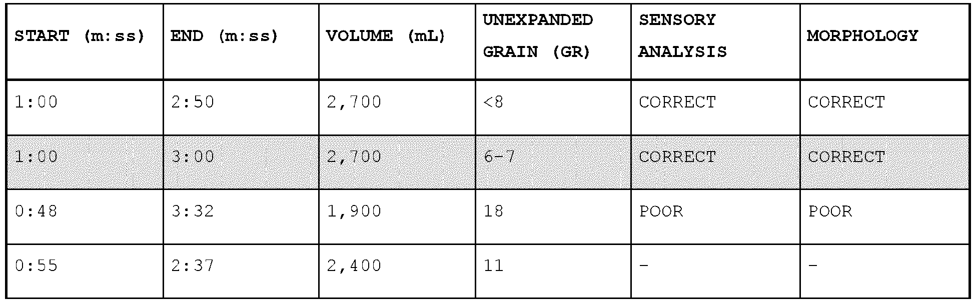

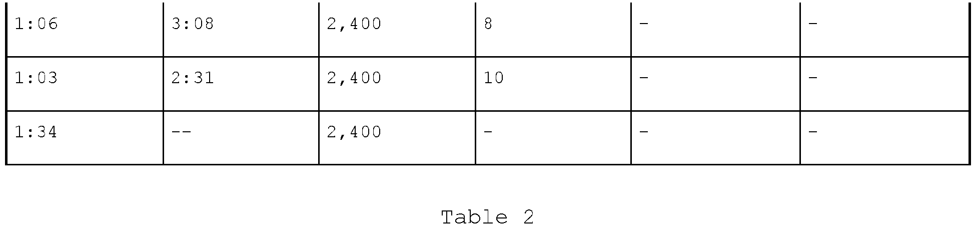

For the ENITER formulations 1 to 5 results shown in Table 2, an example of cooking popcorn in a microwave oven has been performed, in which a paper bag formed with adhesive and a complex of two greaseproof and heat-sealable sheets of paper, with a susceptor in accordance with the present invention, is used between the two sheets of paper. The results are as follows:

In the ENITER 1 formulation, after putting the bag of popcorn in a microwave at 750 W, the popping start time (the time when the first corn kernels start to pop) started at 1:00 and ended at 3:00, with these results being correct, within the usual use in the state of the art. The expansion volume of the bag is 2,700 cc and the unpopped corn kernels are between 6-7 grams. The sensory analysis of the cooking is good, and the unilateral morphology (hard pieces when chewing) and multilateral (sponginess in the mouth) morphology of the popcorn is adequate. Therefore, it is demonstrated that the packaging, in accordance with the invention, is effective and correctly preserves the organoleptic properties of the product.

These results are not reproduced in ENITER formulations 2 to 5, where the unexpanded grain is not acceptable in accordance with market standards, although ENITER 4 would be on the limit of what is deemed to be acceptable. In this point it is noteworthy that EP3401371 (ITENE) does not provide any sensory, morphological, or unexpanded grain test, with these data being of the utmost importance to assess the effectiveness of the susceptor ink.

Finally, note that the preferred implementation (ENITER 1) has a larger volume than any of the compared microwaveable packaging (2,700 vs. 2,400) which is indicative of a higher percentage of popcorn with appropriate organoleptic properties, when compared to the rest of the susceptor ink solutions and on a par with the aluminised polyester packaging currently used in the industry, with a much lower manufacturing cost.

## Claims

1. - A susceptor ink comprising a conductive material in conjunction with one or more vehicles configured for printing on a microwaveable packaging comprising: (a) at least one metallic particle; (b) at least one varnish; and (c) at least one solvent;
**characterised in that** the at least one metallic particle is aluminium present at 19.4% (w/w); the at least one varnish is aliphatic polyurethane present at 12.8% (w/w) and the at least one solvent is a mixture of alcohol and ethyl acetate present at 67.8% (w/w).

2. - The susceptor ink, in accordance with the claim 1, wherein the alcohol is ethanol.

3. - Packaging configured for heating food in a microwave oven comprising a susceptor ink in accordance with any one of claims 1 to 2.

## Patentansprüche

1. - Eine Suszeptor-Tinte, die aus einem leitfähigen Material in Verbindung mit einem oder mehreren Trägern besteht, die zum Bedrucken einer mikrowellengeeigneten Verpackung konfiguriert sind, die folgendes beinhaltet: (a) mindestens ein Metallteilchen; (b) mindestens einen Lack; und (c) mindestens ein Lösungsmittel;
**wobei es sich** bei mindestens einem Metallteilchen um Aluminium handelt, das zu 19,4 % (w/w) vorhanden ist; bei mindestens einem Lack handelt es sich um aliphatisches Polyurethan, das zu 12,8 % (w/w) vorhanden ist, und bei mindestens einem Lösungsmittel handelt es sich um eine Mischung aus Alkohol und Ethylacetat, die zu 67,8 % (w/w) vorhanden ist.

2. - Gemäß Anspruch 1 enthält die Suszeptor-Tinte Ethanol als Alkohol.

3. - Die Verpackung ist für das Erhitzen von Lebensmitteln in einer Mikrowelle ausgelegt und weist eine Suszeptor-Tinte gemäß einem der Ansprüche 1 bis 2 auf.

## Revendications

1. - Une encre susceptrice composée d'un matériau conducteur associé à un ou de plusieurs véhicules configurés pour l'impression sur un emballage micro-ondable composé : (a) d'au moins une particule métallique ; (b) d'au moins un vernis ; et (c) d'au moins un solvant ;
**caractérisée par le fait que** d'au moins une particule métallique en question est de l'aluminium présent à 19,4 % (w/w) ; d'au moins un vernis est du polyuréthane aliphatique présent à 12,8 % (w/w) et d'au moins un solvant est un mélange d'alcool et d'acétate d'éthyle présent à 67,8 % (w/w).

2. - L'encre susceptrice, conformément à la revendication 1, dont l'alcool est de l'éthanol.

3. - Emballage configuré pour réchauffer de la nourriture au four micro-ondes composé d'une encre susceptrice conformément à la revendication 1 ou 2.
